# EUROPEAN PATENT SPECIFICATION

(11) **EP 1 644 681 B1**
(45) Date of publication and mention of the grant of the patent: **03.08.2011**
(21) Application number: 04736994.7
(22) Date of filing: 17.06.2004
(51) Int. Cl.: F27B 9/26

(54) **KILN, PARTICULARLY FOR CERAMIC PRODUCT**
OFEN, INSBESONDERE FÜR KERAMIKPRODUKT
FOUR, SURTOUT POUR PRODUITS CERAMIQUES

(30) Priority: 27.06.2003 IT MO20030192; 16.09.2003 IT MO20030250
(43) Date of publication of application: 12.04.2006
(73) Proprietor: Ceramic Technology Europe Limited, Valletta VLT 12 (MT)
(72) Inventor: GERARDI, Elio, I-41100 Modena (IT)
(74) Representative: Brogi, Graziano
(86) International application number: PCT/IB2004/002010
(87) International publication number: WO 2005/001358

(56) References cited:
- EP-A- 0 936 431
- DE-A- 2 453 783
- DE-A- 2 717 784
- DE-A- 4 034 653
- DE-A- 10 000 276
- GB-A- 191 208 228
- US-A- 1 418 446

## Description

### Technical Field

The present invention relates to a kiln, particularly for ceramic products.

### Background Art

Many kilns are currently known and used to fire or even simply heat the most disparate kinds of products.

In particular, in the ceramic field, two types of kiln can be distinguished: continuous kilns, in which firing occurs by means of the uninterrupted transit of the products within an environment that is kept constantly over time at the same temperature values, and intermittent kilns, in which the emission of heat is instead interrupted every time the treatment of the material ends, so as to allow the operators to perform new steps for unloading and loading the products.

Continuous kilns generally have a tunnel-like firing chamber that is lined on three sides with refractory materials so as to avoid compromising, due to the high temperatures reached during the process, the external supporting structure, which is substantially composed of a metallic framework.

The bottom of this firing chamber is obtained by pairing a plurality of of platforms protected by means of a layer of refractory material, which after being loaded with the ceramic products are made to slide within the kiln by way of appropriate guiding means.

These kilns are not free from drawbacks, including the fact that said platforms, by generally having an extensive surface that is exposed to the internal environment of the kiln, absorb a substantial amount of heat, which is at least partly lost during their motion.

To obviate this, kilns are known in which the firing chamber is closed on all four sides and has, on its bottom, two longitudinally extended slots that are suitable to be crossed by a succession of carriages.

Each one of these carriages cooperates with the respective adjacent carriage, so as to provide at least four resting points for the frames that support the ceramic products; said carriages must accordingly be kept moving with a synchronized advancement by means of suitable simultaneous traction or pusher systems.

Although this embodiment on the one hand allows to reduce significantly the surface of the moving elements that is exposed to heat, on the other hand it has to be provided with particular means for synchronized actuation of the carriages, which require adequate adjustment and have a significant cost.

From document EP 0 936 431 A1 it is known an oven particularly for ceramic products, which comprises a chamber, made of refractory material, that is mounted on a supporting framework which forms at least two longitudinal parallel compartments for the synchronous passage of at least two trolleys.

Each of these trolleys is constituted by a front column and by a rear column provided with pairs of wheels, wherein the columns pass through longitudinal slots of the base of the chamber and have, at preset levels, a plurality of supporting means which are adapted to cooperate with the supporting means of the column of the laterally adjacent trolleys in order to support on at least four points, frames for containing the ceramic products.

However even this known oven appears to request further improvements, as in particular in order to exhibit a more simple and convenient construction of that part, of the structure of the movable trolleys, that is provided for supporting the ceramic product to be subjected to the thermal treatment in the oven.

### Disclosure of the Invention

The aim of the present invention is to obviate the drawbacks of the background art, by providing a kiln, particularly for ceramic products, that allows to increase the energy efficiency and consequently improve the thermal performance of the firing chamber.

Within this aim, an object of the present invention is to provide a kiln that allows the means suitable to transport the products to enter by using the most common and disparate pusher or traction systems, without having to resort to particular and expensive synchronization means.

Another object of the present invention is to provide a kiln that is simple, relatively easy to provide in practice, safe in use, effective in operation, and has a relatively low cost.

This aim and these and other objects that will become better apparent hereinafter are achieved by the present kiln, particularly for ceramic products, comprising a chamber made of refractory material, which is mounted on a supporting, structure that forms at least one longitudinal compartment for the transit of at least one plurality of aligned carriage, each one of said carriages comprising a supporting frame that passes through at least one longitudinal slot in the bottom of said chamber, characterized in that said supporting frame comprises means for supporting, on at least three points, at least one framework for supporting the products to be subjected to thermal treatment.

### Brief Description of the Drawings

Further characteristics and advantages of the present invention will become better apparent from the following detailed description of a preferred but not exclusive embodiment of a kiln, particularly for ceramic products, illustrated by way of non-limiting example in the accompanying drawings, wherein:
Figure 1 is a perspective view of a possible embodiment of the kiln according to the invention;
Figure 2 is an enlarged-scale perspective view of a detail of Figure 1;
Figure 3 is a perspective view of a first embodiment of the carriages of the kiln according to the invention;
Figure 4 is a perspective view of a second embodiment of the carriages of the kiln according to the invention;
Figure 5 is a side view of the carriage of Figure 4;
Figure 6 is a side view of a detail of the carriage of Figure 4;
Figure 7 is a partially sectional schematic and enlarged-scale plan view of a detail of the carriages according to the invention;
Figure 8 is a front view of an alternative embodiment of the supporting means according to the invention;
Figure 9 is a top view of the supporting means of Figure 7;
Figure 10 is a perspective view of the supporting means of Figure 7;
Figure 11 is a schematic and partial view of a first alternative embodiment of the sliding means and of the guiding means of the kiln according to the invention;
Figure 12 is a schematic and partial view of a second alternative embodiment of the sliding means and of the guiding means of the kiln according to the invention;
Figure 13 is a schematic and partially sectional front view of the kiln according to the invention.

### Ways of Carrying Out the Invention

With reference to the figures, the reference numeral 1 generally designates a kiln, particularly for ceramic products, which comprises a structure 2 for supporting a chamber 3 made of refractory material.

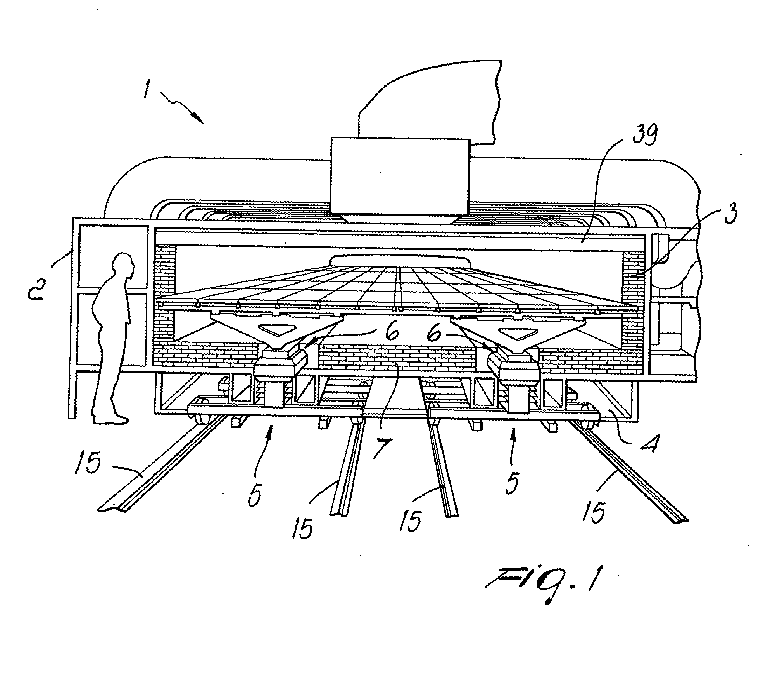

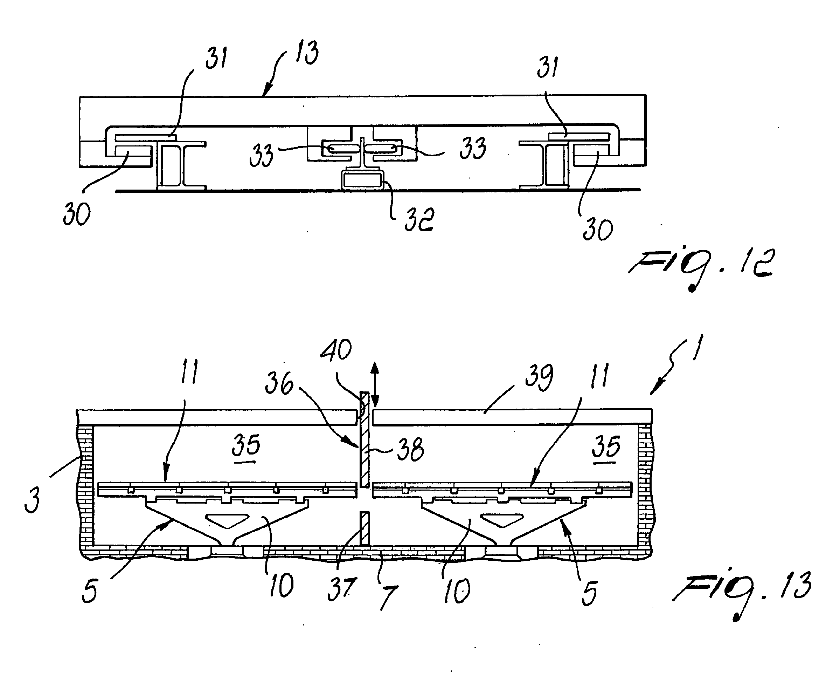

In the embodiment shown in Figures 1 and 13, the supporting structure 2 forms, below the chamber 3 and substantially longitudinally with respect to the kiln 1, at least one compartment 4, whose dimensions are such as to allow the transit of at least one row, preferably two rows, of carriages 5 in succession, arranged so as to be parallel and aligned.

In a second embodiment, it is possible to provide a single row of carriages that run along the entire length of the kiln.

In a third alternative embodiment, the rows of carriages may be three or more.

The choice of the most suitable embodiment is made according to the types of product to be fired and to the associated thermal treatment times and methods.

The carriages 5 of each row comprise a supporting frame, which passes through at least one corresponding slot 6 formed in the bottom 7 of the chamber 3.

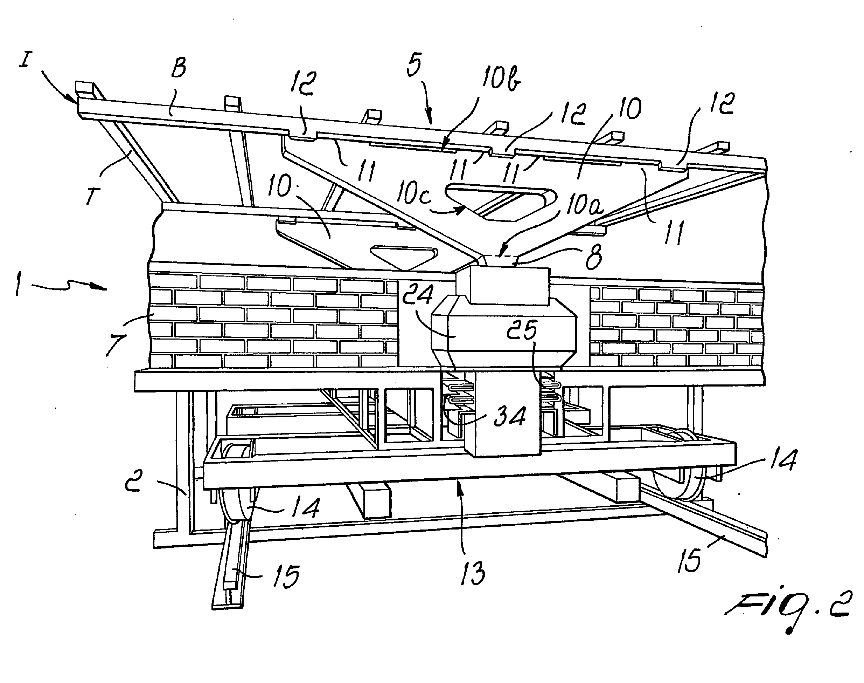

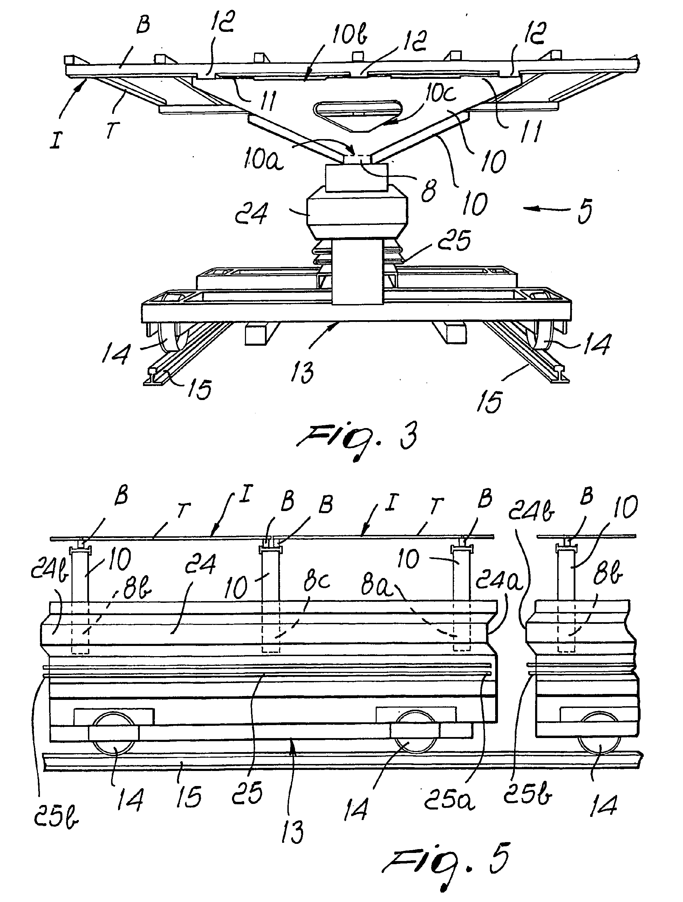

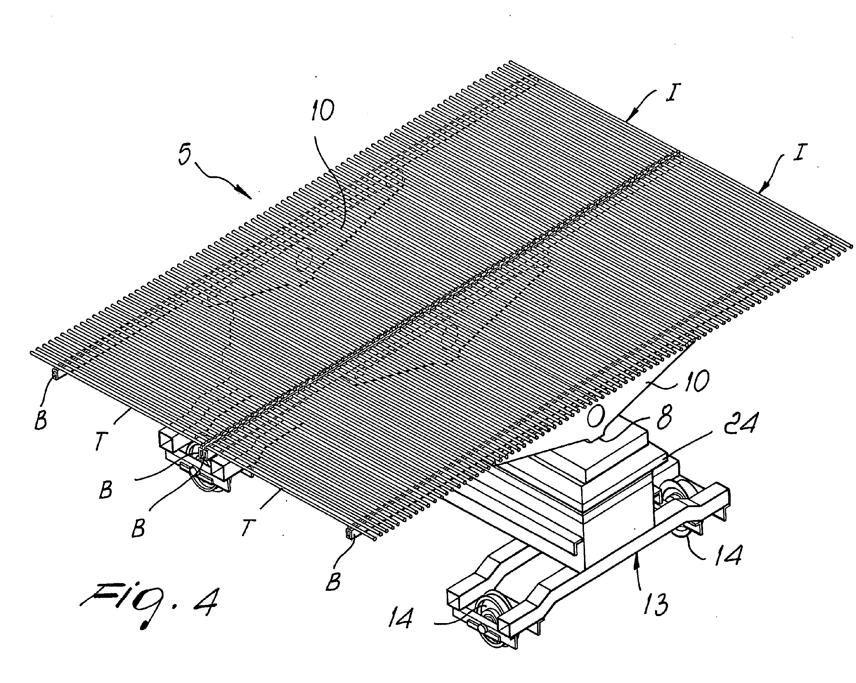

Such supporting frame comprises a front upright 8a and a rear upright 8b, between which it is optionally possible to arrange one or more intermediate uprights 8c; in the embodiment of the carriages 5 shown in Figures 2 and 3, for example, there are only two uprights 8, a front one 8a and a rear one 8b, whereas in the embodiment shown in Figures 4 and 5 there is also an intermediate upright 8c arranged in a central position.

Conveniently, each one of the uprights 8 is constituted by a tubular body that has a square cross-section.

Means for supporting in at least three points a generic framework I are associated with the uprights 8, and the products to be heated are distributed on said framework; conveniently, said supporting means comprise, for each upright 8, a supporting base 10, which lies substantially transversely to the succession of carriages 5 in order to provide the maximum supporting surface for the supported framework I.

The base 10 has a profile, transversely to the carriage 5, which is substantially trapezoidal, with a shorter side 10a that is arranged downward and at which the walls of said base are associated with the respective upright 8, and with an upper longer side 10b at which the framework I can be supported.

Advantageously, the base 10 is formed monolithically with the corresponding upright 8; in particular, the sides of each tubular body 8 protrude from one end so as to form the walls for delimiting the base 10.

The tubular body 8 and the base 10 are substantially constituted by materials such as silicon carbide or the like, in order to ensure good performance in terms of strength at the temperatures that occur during the operation of the kiln 1, which are on the order of 1100 °C.

The walls of the base 10 are shaped so as to form an opening 10c that passes through said base longitudinally with respect to the kiln 1.

It is noted that this configuration of the base 10 allows to provide it with a particularly strong and compact structure without resorting to increases in thickness, which would entail an increase in production costs, which are heavily influenced by the high price of the material that is used.

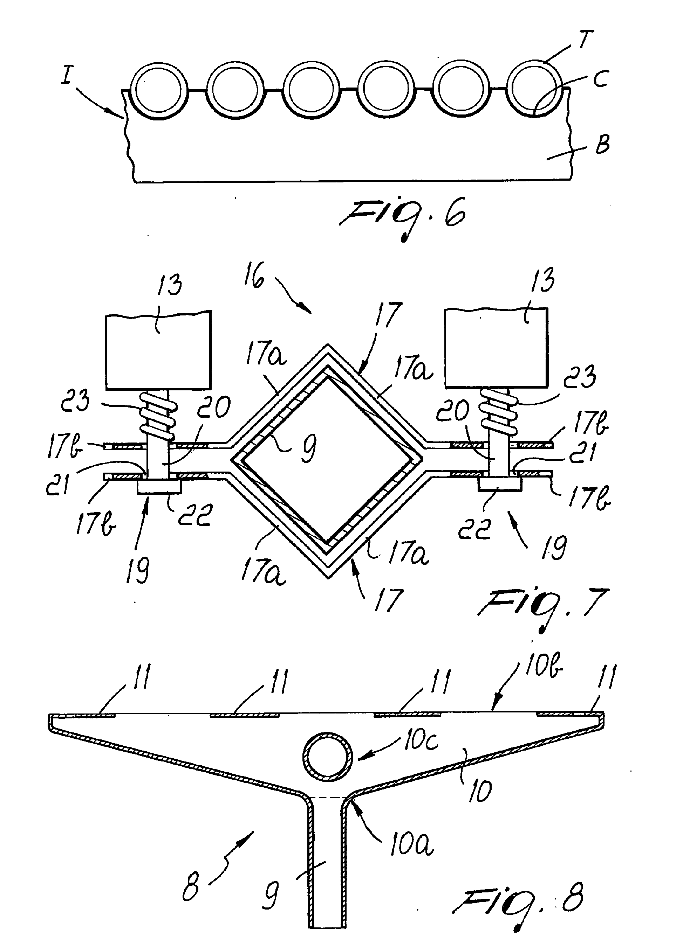

The described embodiment of the base 10, shown in detail in Figures 1, 2 and 3, is particular and non-limiting, since it is also possible to provide alternative embodiments, such as for example the one shown in Figures 8, 9 and 10.

In both of the illustrated embodiments, the base 10 has, on its longer side 10b, abutment elements 11 that are complementary to locating and centering elements 12 provided on the framework I that rests thereon, so as to prevent their relative sliding and ensure their placement; however, said abutment elements might not be provided and the framework I might be connected rigidly to the base 10.

Preferably, the framework I is constituted by a pair of bars B and by a plurality of cross-members T associated transversely with said bars, each bar B being suitable to be arranged on a corresponding base 10.

The cross-members T shown in Figures 2 and 3 have a quadrangular cross-section and are rigidly connected to the bars B.

Figures 4, 5 and 6 instead illustrate an alternative embodiment of the framework I, in which the cross-members T are substantially cylindrical, so as to reduce the surface in contact with the products to be heated and improve their firing, and are supported so that they can rotate about their own axis in order to compensate for the ordinary expansion of the material that affects ceramic products during the application of heat.

In this alternative embodiment in particular, the bars B are provided with semicircular cavities C, at which the ends of the cross-members T rest; the material that constitutes the framework I, similar to the material of the uprights 8 and of the bases 10, is particularly hard in order to facilitate the sliding rotation of the cross-members T in the cavities C.

In the embodiment of the carriages 5 shown in Figures 2 and 3, the length of the cross-members T is substantially equal to the length of the carriages 5, on each of which it is possible to position a single framework I, which is arranged between the front upright 8a and the rear upright 8b.

If an intermediate upright 8c is instead provided (Figures 4 and 5), the length of the cross-members T can be substantially equal to half the length of the carriages 5, on each of which it is possible to arrange two frameworks I, one arranged between the front upright 8a and the intermediate upright 8c and one arranged between the intermediate upright 8c and the rear upright 8b.

Below the bottom 7 of the chamber 3, the supporting frame comprises a supporting body 13 for sliding means, which are engaged in guiding means associated with the supporting structure 2.

In the embodiment of the present invention shown in Figures 1 to 5, said sliding means are constituted by two pairs of wheels 14, which can roll on guiding means formed conveniently by two tracks 15.

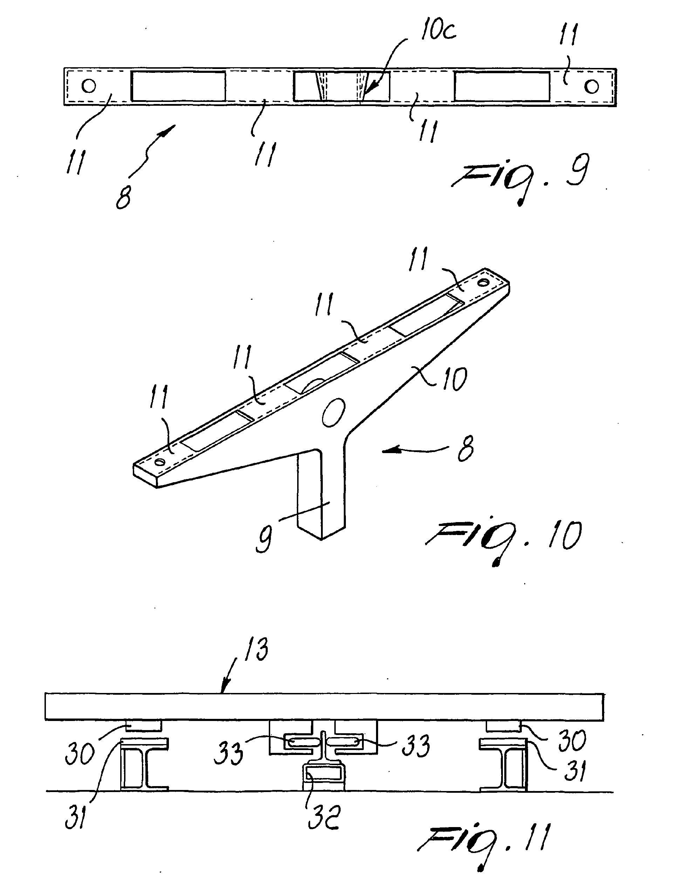

In an alternative embodiment of the kiln 1, shown schematically in Figures 11 and 12, the sliding means and the guiding means are instead of a magnetic type; in particular, the former comprise two permanent magnets 30, which are associated with the supporting body 13, and the latter include two corresponding magnetic rails 31, which are longitudinal with respect to the chamber 3.

In this embodiment, the magnetic poles of the magnets 30 and of the magnetic rails 31 are identical (Figure 11) or opposite (Figure 12); the magnets 30 therefore can be arranged above or below the magnetic rails 31 in order to utilize their mutual repulsion or attraction and allow the carriages 5 to remain raised from the ground.

In order to avoid lateral movements of the carriages 5, this alternative embodiment of the invention comprises a centering rail 32, which runs parallel to the magnetic rails 31 and on which two disks 33 can roll, said disks being supported on the supporting body 13; in particular, said disks can rotate about substantially vertical axes and are arranged on opposite sides with respect to said centering rail.

As an alternative to the disks 33, it is possible to provide two additional magnets, the centering rail 32 being itself of the magnetic type.

The uprights 8 of each carriage 5 can be associated with the supporting body 13 with the interposition of coupling means 16 of the elastic type, which are at least partially movable so as to compensate the effects of the thermal expansion of said uprights.

For each one of the uprights 8, the coupling means 16 comprise two jaws 17, which can engage by contact opposite sides of said upright.

Advantageously, each jaw 17 is formed by a rolled section, which is folded along mutually parallel lines so as to form four adjacent portions: two internal portions 17a are inclined at right angles to each other, forming profiles that are complementary to two adjacent surfaces of the tubular body 8, while two end portions 17b are folded at 45° with respect to the preceding portions.

Moreover, the jaws 17 are mutually connected by way of elastic fastening means 19, which advantageously comprise two pivots 20 that are associated with the supporting body 13 and along which said jaws can slide.

In particular, the pivots 20 are arranged on opposite sides with respect to the corresponding upright 8, and each pivot passes through two corresponding holes 21 provided on the end portions 17b of the two jaws 17.

One end of the pivots 20 is associated with the supporting body 13 and the opposite end is provided with an enlarged portion 22 for abutment of the adjacent jaw.

The elastic fastening means 19 further comprise a preloaded spring 23, which is arranged around each pivot 20 and acts in the direction of mutual approach of the jaws 17.

In the embodiment of the elastic fastening means 19 shown in Figure 7, the spring is engaged in abutment against the supporting body 13 and against the jaw 17 that is adjacent thereto, but alternative embodiments of the present invention, in which for example the spring 23 is interposed between the enlarged portion 22 and the opposite jaw, are also possible.

The uprights 8 of each carriage 5 are mutually connected by a longitudinal member 24, which is made of refractory material and is slidingly engaged along the corresponding slot.

Conveniently, the cross-section of the longitudinal member 24 and the corresponding profile of the slot 6 are mutually complementary and have a substantially octagonal shape, with one side that is directed toward the chamber 3 in order to reduce the exposure of said longitudinal member to the heat sources; in any case, alternative embodiments of said cross-section and of said profile are not excluded, and all are within the protective scope of the present invention.

Below each slot 6, the supporting structure 2 comprises a longitudinal profiled element 34 that has a substantially comb-like cross-section and in which a complementary profiled element 25, rigidly coupled to the supporting body 13 of each carriage 5, is engaged slidingly.

Conveniently, said profiled elements having the above described cross-section form a labyrinth-like seal.

The front end 24a of the longitudinal member 24 and the front end 25a of the profiled element 25 of each carriage 5 are shaped so as to have contoured profiles that are suitable for longitudinal coupling respectively to the rear end 24b of the longitudinal member 24 and to the rear end 25b of the profiled element 25 of the preceding carriage 5.

It is noted that the use of complex structures and contours, such as the labyrinth-like seal formed by the profiled elements 34 and 25, the octagonal cross-section of the longitudinal member 24 and the longitudinal coupling between the carriages 5, are constructive solutions that are used in order to reduce seepage of hot air and loss of heat from the chamber 3, accordingly allowing a true energy saving.

Each one of the rows of carriages 5 of the kiln 1 can be actuated by means of a corresponding pusher, which is arranged upstream of the kiln 1 and is not shown in the figures because it is of a known type.

In particular, in the embodiments of the present invention provided with two or more successions or rows of carriages 5, said rows are moved by resorting to separate and independent pushers, which are optionally capable of introducing them in the kiln 1 with mutually different advancement speeds in order to allow to treat simultaneously ceramic products that require different heating and cooling times.

In these embodiments it is possible to provide means 36 for separating the environment formed inside the chamber 3, which can be associated longitudinally with said chamber in an active configuration, in which they divide at least partially said environment into two or more longitudinal portions 35 suitable to be crossed by a corresponding plurality of carriages 5.

In the embodiment of the kiln 1 shown in Figure 13, for example, the separator means 36 comprise a partition 37 made of refractory material, which is rigidly coupled to the bottom 7 of the chamber 3 and is substantially as high as the base 10, and one or more removable walls 38.

The walls 3 8 also are made of refractory material, and their height is at least equal to the distance between the supporting surface of the base 10 and the ceiling 39 of the chamber 3.

The walls 38 may be associated with the chamber 3 independently of each other in order to assume the operating configuration in corresponding portions along the longitudinal extension of the kiln 1.

In particular, the walls 38 can perform a vertical translational motion in the operating configuration by means of a longitudinal slot 40 provided in the ceiling 39, and their height with respect to the bottom 7 can be determined by way of adjustment means, which are not shown since they are of a conventional type.

It is thus possible to control any transfer of heat between the portions 35 caused by the difference in temperature between the different products of two laterally adjacent carriages.

The operation of the present invention is as follows: the two successions of carriages 5, once loaded with the products to be treated, are moved by way of the action of the pushers and can be introduced in the kiln 1 even with mutually different advancement speeds.

Once the output end of the kiln 1 has been reached, the carriages 5 can be sent to an area for unloading the fired products and then loaded again.

In practice it has been found that the described invention achieves the intended aim and objects, and in particular the fact is stressed that it allows to convey each supporting framework on a single carriage, differently from conventional kilns in which two side-by-side carriages are required.

With respect to these known types of kiln, in particular, for an equal number of frameworks being conveyed, the present invention provides a halved number of successions of aligned carriages and therefore of corresponding slots, allowing therefore to reduce the seepage of hot air and the loss of heat through said slots, this advantage increasing as the longitudinal dimensions of the kiln chamber increase.

With the same number of successions of carriages, instead, the present invention allows to convey twice as many frameworks, optionally allowing to subject the products to differentiated thermal treatments.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without abandoning the protective scope of the appended claims.

The disclosures in Italian Patent Applications No. MO2003A000192 and M02003A000250, from which this application claims priority, are incorporated herein by reference.

## Claims

1. A kiln (1), particularly for ceramic products, comprising a chamber (3) made of refractory material, which is mounted on a supporting structure (2) that forms at least one longitudinal compartment (4) for the transit of at least one plurality of aligned carriages (5), each one of said carriages (5) comprising a supporting frame (8, 10) that passes through at least one longitudinal slot (6) in the bottom (7) of said chamber (3),
wherein said supporting frame (8, 10) comprises supporting means (10) for supporting, on at least three points, at least one framework (I) provided for supporting the products to be subjected to thermal treatment, and at least one front upright (8a) and one rear upright (8b) which pass through said slot (6), and
wherein said supporting means comprise, for each one of said uprights (8), at least one supporting base (10) that is elongated substantially transversely to said carriage (5),
said kiln (1) being **characterized in that** said supporting base (10) has a substantially trapezoidal transverse profile with respect to the carriage (5), with a lower shorter side (10a) at which said base (10) is associated with the respective upright (8a, 8b) and with an upper longer side (10b) at which said supporting framework (I) can rest.

2. The kiln according to one or more of the preceding claims, **characterized in that** each one of said uprights (8) comprises a substantially tubular body (8).

3. The kiln (1) according to claims 1 or 2, **characterized in that** said supporting base (10) comprises abutment elements (11), at said longer side (10b), which are complementary with respect to abutment and centering elements (12) provided on said supporting framework (I).

4. The kiln according to one or more of the preceding claims, **characterized in that** said supporting base (10) is monolithic with the respective upright (8, 8a, 8b).

5. The kiln according to one or more of the preceding claims, as dependent on claim 2, **characterized in that** each one of said uprights (8) protrudes above said tubular body so as to form the walls for delimiting said supporting base (10).

6. The kiln according to one or more of the preceding claims, **characterized in that** said supporting base (10) and the respective upright (8) are made of a material that withstands temperatures at least equal to 1100 C.

7. The kiln according to claim 6, **characterized in that** said material is of the type of silicon carbide or the like.

8. The kiln according to one or more of the preceding claims, **characterized in that** said supporting framework (I) comprises two bars (B) and a plurality of cross-members (T) associated transversely therewith, each bar (B) being adapted to be arranged on a corresponding supporting base (10).

9. The kiln according to claim 8, **characterized in that** said cross-members (T) have a substantially cylindrical shape.

10. The kiln according to claims 8 or 9, **characterized in that** said cross-members (T) are associated with said bars (B) so that they can rotate about their own axis.

11. The kiln according to one or more of the preceding claims, **characterized in that** said supporting frame (8, 10) comprises a supporting body (13) for sliding means (14), which are engaged in guiding means (15) that are associated with said supporting structure (2) and are accommodated in said compartment (4).

12. The kiln according to claim 11, **characterized in that** said sliding means comprise at least two pairs of wheels (14), front and rear, and **in that** said guiding means comprise a pair of tracks (15).

13. The kiln according to claim 11, **characterized in that** said sliding means comprise at least one magnet (30) and **in that** said guiding means comprise at least one corresponding magnetic rail (31).

14. The kiln according to one or more of the claims 11 to 13, **characterized in that** each one of said uprights is associable with said supporting body (13).

15. The kiln according to one or more of the claims 11 to 14, **characterized in that** coupling means (16) of the elastic type are interposed between each one of said uprights (8) and said supporting body (13).

16. The kiln according to claim 15, as dependent on claim 2, **characterized in that** said coupling means (16) comprise at least two jaws (17) that can engage by contact opposite parts of each tubular body (8) of said uprights (8) and are mutually connected by way of elastic fastening means (19, 20, 23).

17. The kiln according to claim 16, **characterized in that** said jaws (17) have profiles that are at least partially complementary (17a) to at least one portion of the outer surface of the corresponding tubular body (8).

18. The kiln according to claims 16 or 17, **characterized in that** said elastic fastening means comprise at least one pivot (20) associated with said supporting body (13) on which said jaws (17) are slidingly engaged and around which there is a spring (23) that acts in the direction of mutual approach of the jaws (17).

19. The kiln according to one or more of the preceding claims, **characterized in that** said uprights (8) are mutually connected by a longitudinal member (24) that has a cross-section that is complementary to said slot (6), said longitudinal member (24) being engaged so that it can slide in said slot (6).

20. The kiln according to claim 19, **characterized in that** said longitudinal member (24) is constituted by a material of a substantially refractory type.

21. The kiln according to one or more of the preceding claims, **characterized in that** below said slot (6) said supporting structure (2) comprises a longitudinal profiled element (34), which has a substantially comb-like cross-section and in which a complementary profiled element (25) is engaged, said complementary profiled element (25) being rigidly connected to said supporting frame (8, 10) below said longitudinal member (24), said longitudinal profiled element (34) and said complementary profiled element (25) forming a labyrinth-like seal.

22. The kiln according to one or more of the preceding claims, **characterized in that** it comprises separator means (36) for separating the environment formed by said chamber (3), which are associable longitudinally therewith and are adapted to assume an active configuration, in which said environment is divided at least partially into two or more longitudinal portions (35) for the passage of corresponding pluralities of aligned carriages (5).

23. The kiln according to claim 22, **characterized in that** said separator means (36) comprise at least one wall (38) made of refractory material, which is detachably associable with said chamber (3).

24. The kiln according to claim 23, **characterized in that** said separator means (36) comprise a plurality of said independent walls (38), which are associable with corresponding longitudinal portions of said chamber (3).

25. The kiln according to claims 23 or 24, **characterized in that** the ceiling (39) of said chamber (3) comprises at least one longitudinal slot (40) for the insertion of said wall (38) by vertical sliding.

26. The kiln according to one or more of the claims 23 to 25, **characterized in that** it comprises means for adjusting the height of said wall (38) with respect to said bottom (7) of the chamber (3).

27. The kiln according to one or more of the claims 22 to 26, **characterized in that** said separator means (36) comprise a partition (37) made of a refractory material, which is longitudinally rigidly coupled to said bottom (7) of the chamber (3).

28. The kiln according to claim 27, **characterized in that** said partition (37) is substantially as high as the distance between said bottom (7) of the chamber (3) and the supporting surface of said supporting base (10).

29. The kiln according to one or more of the preceding claims 23 to 26, **characterized in that** said wall (38) is at least as high as the distance between the supporting surface of said supporting base (10) and the ceiling (39) of said chamber (3).

## Patentansprüche

1. Ofen (1), insbesondere für Keramikprodukte, mit einer aus feuerfestem Material hergestellten Kammer (3), die auf einer Tragkonstruktion (2) montiert ist, die mindestens ein Längsabteil (4) für den Durchhang mindestens einer Vielzahl ausgerichteter Fahrgestelle (5) bildet, wobei jedes der Fahrgestelle (5) einen Tragrahmen (8, 10) aufweist, der durch mindestens einen Längsspalt (6) in der Unterseite (7) der Kammer (3) tritt,
wobei der Tragrahmen (8, 10) eine Trageinrichtung (10) zum Tragen mindestens eines Rahmenwerks (I), das zum Tragen der einer Wärmebehandlung zu unterziehenden Produkte bereitgestellt wird, an mindestens drei Punkten und mindestens einen vorderen Ständer (8a) und einen hinteren Ständer (8b), die durch den Spalt (6) treten, aufweist und
wobei die Trageinrichtung für jeden der Ständer (8) mindestens eine tragende Basis (10), die im Wesentlichen quer zum Fahrgestell (5) verlängert ist, aufweist,
wobei der Ofen (1) **dadurch gekennzeichnet ist, dass** die tragende Basis (10) in Bezug auf das Fahrgestell (5) ein im Wesentlichen trapezförmiges Querprofil hat, und zwar mit einer unteren, kürzeren Seite (10a), auf der die Basis (10) mit dem entsprechenden Ständer (8a, 8b) verbunden ist, und mit einer oberen, längeren Seite (10b), auf der das tragende Rahmenwerk (I) aufliegen kann.

2. Ofen gemäß Anspruch 1, **dadurch gekennzeichnet, dass** jeder der Ständer (8) einen im Wesentlichen rohrförmige Körpers (8) aufweist.

3. Ofen (1) gemäß Anspruch 1 oder 2, **dadurch gekennzeichnet, dass** die tragende Basis (10) an der längeren Seite (10b) Auflagerelemente (11) aufweist, die komplementär in Bezug auf Auflager- und Zentrierelemente (12) sind, die auf dem tragenden Rahmenwerk (I) bereitgestellt werden.

4. Ofen gemäß einem oder mehr der vorangegangenen Ansprüche, **dadurch gekennzeichnet, dass** die tragende Basis (10) einstückig mit dem entsprechenden Ständer (8, 8a, 8b) ist.

5. Ofen gemäß einem oder mehr der vorangegangenen Ansprüche als Unteranspruch von Anspruch 2, **dadurch gekennzeichnet, dass** jeder der Ständer (8) oberhalb des rohrförmigen Körpers hinausragt, um die Wände zum Abgrenzen der tragenden Basis (10) zu bilden.

6. Ofen gemäß einem oder mehr der vorangegangenen Ansprüche, **dadurch gekennzeichnet, dass** die tragende Basis (10) und der entsprechende Ständer (8) aus einem Material hergestellt sind, das Temperaturen von mindestens 1100 °C standhält.

7. Ofen gemäß Anspruch 6, **dadurch gekennzeichnet, dass** das Material von der Art aus Siliziumkarbid oder dergleichen ist.

8. Ofen gemäß einem oder mehr der vorangegangenen Ansprüche, **dadurch gekennzeichnet, dass** das tragende Rahmenwerk (I) zwei Stäbe (B) und eine Vielzahl von Querträgern (T) aufweist, die mit ihnen quer verbunden sind, wobei jeder Stab (B) für die Anordnung auf einer entsprechenden tragenden Basis (10) angepasst ist.

9. Ofen gemäß Anspruch 8, **dadurch gekennzeichnet, dass** die Querträger (T) eine im Wesentlichen zylinderische Form haben.

10. Ofen gemäß Anspruch 8 oder 9, **dadurch gekennzeichnet, dass** die Querträger (T) mit den Stäben (B) so verbunden sind, dass sie sich um ihre eigene Achse drehen können.

11. Ofen gemäß einem oder mehr der vorangegangenen Ansprüche, **dadurch gekennzeichnet, dass** der Tragrahmen (8, 10) einen tragenden Körper (13) für eine Gleiteinrichtung (14) aufweist, die in eine Führungseinrichtung (15) greift, die mit der Tragkonstruktion (2) verbunden ist und von dem Abteil (4) aufgenommen wird.

12. Ofen gemäß Anspruch 11, **dadurch gekennzeichnet, dass** die Gleiteinrichtung mindestens zwei Paar Räder (14), vorn und hinten, aufweist, und **dadurch**, dass die Führungseinrichtung ein Paar Schienenwege (15) aufweist.

13. Ofen gemäß Anspruch 11, **dadurch gekennzeichnet, dass** die Gleiteinrichtung mindestens einen Magnet (30) aufweist, und **dadurch**, dass die Führungseinrichtung mindestens eine entsprechende magnetische Schiene (31) aufweist.

14. Ofen gemäß einem oder mehr der Ansprüche 11 bis 13, **dadurch gekennzeichnet, dass** jeder der Ständer mit dem tragenden Körper (13) verbindbar ist.

15. Ofen gemäß einem oder mehr der Ansprüche 11 bis 14, **dadurch gekennzeichnet, dass** eine Kupplungseinrichtung (16) von elastischer Bauart zwischen jeden der Ständer (8) und den tragenden Körper (13) gesetzt ist.

16. Ofen gemäß Anspruch 15 als Unteranspruch von Anspruch 2, **dadurch gekennzeichnet, dass** die Kupplungseinrichtung (16) mindestens zwei Backen (17) aufweist, die durch Kontakt mit gegenüberliegenden Teilen jedes rohrförmigen Körpers (8) der Ständer (8) eingreifen können und mittels elastischer Befestigungsmittel (19, 20, 23) miteinander verbunden sind.

17. Ofen gemäß Anspruch 16, **dadurch gekennzeichnet, dass** die Backen (17) Profile haben, die mindestens teilweise komplementär (17a) zu mindestens einem Teil der äußeren Oberfläche des entsprechenden rohrförmigen Körpers (8) sind.

18. Ofen gemäß Anspruch 16 oder 17, **dadurch gekennzeichnet, dass** die elastischen Befestigungsmittel mindestens einen Zapfen (20) aufweisen, der mit dem tragenden Körper (13) verbunden ist, an dem die Backen (17) gleitend eingreifen und den eine Feder (23) umgibt, die in der Richtung der gegenseitigen Annäherung der Backen (17) wirkt.

19. Ofen gemäß einem oder mehr der vorangegangenen Absprüche, **dadurch gekennzeichnet, dass** die Ständen (8) über einen Längsträger (24) miteinander verbunden sind, dessen Querschnitt komplementär zum Spalt (6) list wobei der Längsträger (24) so ergriffen wird, dass er im Spalt (6) gleiten kann.

20. Ofen gemäß Anspruch 19, **dadurch gekennzeichnet, dass** der Längsträger (24) durch ein Material von im Wesentlichen feuerfester Art gebildet wird.

21. Ofen gemäß einem oder mehr der vorangegangenen Ansprüche, **dadurch gekennzeichnet, dass** unter dem Spalt (6) die Tragkonstruktion (2) ein längs verlaufendes, profiliertes Element (34) aufweist, das einen im Wesentlichen kammähnlichen Querschnitt hat und in das ein komplementäres, profiliertes Element (25) greift, wobei das komplementäre, profilierte Element (25) mit dem Tragrahmen (8, 10) unter dem Längsträger (24) starr verbunden ist, wobei das längs verlaufende, profilierte Element (34) und das komplementäre, profilierte Element (25) eine labyrinthähnliche Dichtung bilden.

22. Ofen gemäß einem oder mehr der vorangegangenen Ansprüche, **dadurch gekennzeichnet, dass** er eine Trenneinrichtung (36) zum Trennen der durch die Kammer (3) gebildeten Umgebung aufweist, die mit ihr in Längsrichtung verbindbar und angepasst ist, eine aktive Konfiguration einzunehmen, in der die Umgebung mindestens teilweise in zwei oder mehr Längsteile (35) für den Durchgang einer entsprechenden Vielzahl ausgerichteter Fahrgestelle (5) unterteilt wirt.

23. Ofen gemäß Anspruch 22, **dadurch gekennzeichnet, dass** die Trenneinrichtung (36) mindestens eine aus feuerfestem Material hergestellte Wand (38) aufweist, die mit der Kammer (3) abtrennbar verbindbar ist.

24. Ofen gemäß Anspruch 23, **dadurch gekennzeichnet, dass** die Trenneinrichtung (36) eine Vielzahl der unabhängigen Wände (38) aufweist, die mit entsprechenden Längsteile der Kammer (3) verbindbar sind.

25. Ofen gemäß Anspruch 23 oder 24, **dadurch gekennzeichnet, dass** die Decke (39) der Kammer (3) mindestens einen Längsspalt (40) zum Einsetzen der Wand (38) durch vertikales Gleiten aufweist.

26. Ofen gemäß einem oder mehr der Ansprüche 23 bis 25, **dadurch gekennzeichnet, dass** er Einrichtungen zum Anpassen der Höhe der Wand (38) in Bezug auf die Unterseite (7) der Kammer (3) aufweist.

27. Ofen gemäß einem oder mehr der Ansprüche 22 bis 26, **dadurch gekennzeichnet, dass** die Trenneinrichtung (36) eine aus einem feuerfesten Material hergestellte Trennwand (37) aufweist, die mit der Unterseite (7) der Kammer (3) in Längsrichtung starr verbunden ist.

28. Ofen gemäß Anspruch 27, **dadurch gekennzeichnet, dass** die Trennwand (37) im Wesentlichen so hoch wie der Abstand zwischen der Unterseite (7) der Kammer (3) und der tragenden Oberfläche der tragenden Basis (10) ist.

29. Ofen gemäß einem oder mehr der vorangegangenen Ansprüche 23 bis 26, **dadurch gekennzeichnet, dass** die Wand (38) mindestens so hoch wie der Abstand zwischen der tragenden Oberfläche der tragenden Basis (10) und der Decke (39) der Kammer (3) ist.

## Revendications

1. Un four (1), en particulier pour les produits en céramique, comprenant une chambre (3) en matériau réfractaire, qui est montée sur une structure de support (2) qui forme au moins un compartiment (4) longitudinal pour le passage d'au moins une pluralité de chariots (5) alignés, chacun desdits chariots (5) comprenant un cadre de support (8, 10) qui passe à travers au moins une fente (6) longitudinale dans le fond (7) de ladite chambre (3),
où ledit cadre de support (8, 10) comprend des moyens de support (10), sur au moins trois points, au moins un cadre (I) pourvu pour soutenir les produits qui seront soumis à un traitement thermique, et au moins un montant avant (8a) et un montant arrière (8b), qui passent à travers cette fente (6), et
où lesdits moyens de support comprennent, pour chacun desdits montants (8), au moins une base de support (10) qui est allongée sensiblement transversalement par rapport audit charriot (5),
ledit four (1) étant **caractérisé en ce que** ladite base de support (10) a un profil transversal sensiblement trapézoïdale par rapport au chariot (5), avec un côté (10a) inférieur plus court en correspondance duquel ladite base (10) est associée au montant (8a, 8b) respectif et avec un côté (10b) supérieur plus long en correspondance duquel ledit cadre de support (I) peut s'appuyer.

2. Four selon une ou plusieurs des revendications précédentes, **caractérisé en ce que** chacun desdits montants (8) comprend un corps sensiblement tubulaire (8).

3. Four (1) selon les revendications 1 ou 2, **caractérisé en ce que** ladite base de support (10) comprend des éléments de butée (11), au niveau dudit côté (10b) plus long, qui sont complémentaires par rapport aux éléments de butée et de centrage (12) prévus sur ledit cadre de support (1).

4. Four selon une ou plusieurs des revendications précédentes, **caractérisé en ce que** ladite base de support (10) est monolithique avec le respectif montant (8, 8a, 8b).

5. Four selon une ou plusieurs des revendications précédentes, comme dépendant de la revendication 2, **caractérisé en ce que** chacun desdits montants (8) fait saillie au-dessus dudit corps tubulaire en formant des parois de délimitation de ladite base de support (10).

6. Four selon une ou plusieurs des revendications précédentes, **caractérisé en ce que** ladite base de support (10) et le montant (8) respectif sont faits d'un matériau qui résiste à des températures au moins égale à 1100 °C.

7. Four selon la revendication 6, **caractérisé en ce que** ledit matériau est du type de carbure de silicium ou analogue.

8. Four selon une ou plusieurs des revendications précédentes, **caractérisé en ce que** ledit cadre de support (I) comprend deux barres (B) et une pluralité de traverses (T) associées transversalement avec elles, chaque barre (B) étant adaptée pour être disposée sur une base de support (10) correspondante.

9. Four selon la revendication 8, **caractérisé en ce que** lesdites traverses (T) ont une forme sensiblement cylindrique.

10. Four selon les revendications 8 ou 9, **caractérisé en ce que** lesdites traverses (T) sont associées avec lesdites barres (B) de façon qu'elles puissent tourner autour de leur axe.

11. Four selon une ou plusieurs des revendications précédentes, **caractérisé en ce que** ledit cadre de support (8, 10) comprend un corps de support (13) pour les moyens de coulissement (14), qui sont engagés dans des moyens de guidage (15) qui sont associés à ladite structure de support (2) et sont logés dans ledit compartiment (4).

12. Four selon la revendication 11, **caractérisé en ce que** lesdits moyens de coulissement comprennent au moins deux paires de roues (14), avant et arrière, et **en ce que** lesdits moyens de guidage comprennent une paire de voies ferrées (5).

13. Four selon la revendication 11, **caractérisé en ce que** lesdits moyens de coulissement comprennent au moins un aimant (30) et **en ce que** lesdits moyens de guidage comprennent au moins un rail (31) magnétique correspondant.

14. Four selon une ou plusieurs des revendications de la 11 à la 13, **caractérisé en ce que** chacun desdits montants est associable avec ledit corps de support (13).

15. Four selon une ou plusieurs des revendications de la 11 à la 14, **caractérisé en ce que** des moyens de couplage (16) de type élastique sont interposés entre chacun desdits montants (8) et ledit corps de support (13).

16. Four selon la revendication 15, comme dépendant de la revendication 2, **caractérisé en ce que** lesdits moyens de couplage (16) comprennent au moins deux mâchoires (17) qui peuvent s'engager en contact sur des portions opposées de chaque corps tubulaire (8) desdits montants (8) et sont reliées entre elles par des moyens de fixation élastique (19, 20, 23).

17. Four selon la revendication 16, **caractérisé en ce que** lesdites mâchoires (17) ont des profils qui sont au moins partiellement complémentaires (17a) par rapport à au moins une portion de la surface extérieure du corps tubulaire (8) correspondant.

18. Four selon les revendications 16 ou 17, **caractérisé en ce que** lesdits moyens de fixation élastiques comprennent au moins un pivot (20) associé audit corps de support (13) sur lequel lesdites mâchoires (17) sont engagées de manière coulissante et autour duquel il se trouve un ressort (23) qui agit dans la direction d'approchement réciproque des mâchoires (17).

19. Four selon une ou plusieurs des revendications précédentes, **caractérisé en ce que** lesdits montants (8) sont reliés entre eux par un longeron (24) qui a une section transversale qui est complémentaire par rapport à ladite fente (6), ledit longeron (24) étant engagé de façon qu'il puisse coulisser dans ladite fente (6).

20. Four selon la revendication 19, **caractérisé en ce que** ledit longeron (24) est constitué d'un matériau d'un type sensiblement réfractaire.

21. Four selon une ou plusieurs des revendications précédentes, **caractérisé en ce que**, en dessous de ladite fente (6), ladite structure de support (2) comprend un élément longitudinale profilé (34), qui a une section sensiblement en forme de peigne et dans lequel une élément complémentaire profilé (25) est engagé, ledit élément complémentaire profilé (25) étant lié de manière solidaire audit cadre de support (8, 10) au-dessous dudit longeron (24), ledit élément longitudinal profilé (34) et ledit élément complémentaire profilé (25) formant un joint labyrinthe.

22. Four selon une ou plusieurs des revendications précédentes, **caractérisé en ce qu'**il comprend des moyens séparateurs (36) pour séparer l'espace formé par ladite chambre (3), qui sont associable longitudinalement avec elle-même et sont adaptés de façon à assumer une configuration active, dans laquelle ledit espace est divisé en au moins deux ou plusieurs parties longitudinales (35) pour le passage d'une pluralité correspondante de charriots (5) alignés.

23. Four selon la revendication 22, **caractérisé en ce que** lesdits moyens de séparation (36) comprennent au moins une paroi (38) en matériau réfractaire, qui est associable de manière amovible avec ladite chambre (3).

24. Four selon la revendication 23, **caractérisé en ce que** lesdits moyens de séparation (36) comprennent une pluralité de parois (38) indépendantes, qui sont associables avec des portions longitudinales correspondantes de ladite chambre (3).

25. Four selon les revendications 23 ou 24, **caractérisé en ce que** le plafond (39) de cette chambre (3) comprend au moins une fente longitudinale (40) pour l'insertion de ladite paroi (38) par coulissement vertical.

26. Four selon une ou plusieurs des revendications de la 23 à la 25, **caractérisé en ce qu'**il comprend des moyens pour régler la hauteur de ladite paroi (38) par rapport audit fond (7) de la chambre (3).

27. Four selon une ou plusieurs des revendications de la 22 à la 26, **caractérisé en ce que** lesdits moyens de séparation (36) comprennent une cloison (37) faite d'un matériau réfractaire, qui est couplé longitudinalement de manière rigide audit fond (7) de la chambre (3).

28. Four selon la revendication 27, **caractérisé en ce que** ladite cloison (37) est sensiblement haute comme la distance entre ledit fond (7) de la chambre (3) et la surface d'appui de ladite base de support (10).

29. Four selon une ou plusieurs des revendications de la 23 à la 26, **caractérisé en ce que** ladite paroi (38) est haute au moins comme la distance entre la surface de support de ladite base de support (10) et le plafond (39) de ladite chambre (3).
